# EUROPEAN PATENT APPLICATION

(11) **EP 4 694 216 A1**
(43) Date of publication of application: **11.02.2026**
(21) Application number: 23929495.2
(22) Date of filing: 31.03.2023
(51) Int. Cl.: H04W 4/021

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Gunzelmann, Rainer
(86) International application number: PCT/CN2023/085728
(87) International publication number: WO 2024/197912

(57) **Abstract**

Embodiments of the present disclosure provide an information transmission method and apparatus, a communication device, and a storage medium. A core network device sends uplink positioning reference signal configuration information to an access network device, where the uplink positioning reference signal configuration information is used for indicating one or more uplink positioning reference signal configuration parameters and validity area information associated with the one or more uplink positioning reference signal configuration parameters.

## Description

### FIELD

The present disclosure relates to, but is not limited to, the field of wireless communication technologies, and in particular, to an information transmission method and apparatus, a communication device, and a storage medium.

### BACKGROUND

The Fifth Generation (5th Generation, 5G) mobile communication New Radio (NR) introduces various positioning technologies, which can achieve positioning of User Equipment (UE). For uplink positioning technologies and uplink-downlink hybrid positioning technologies, an access network device (such as a gNB) needs to configure an uplink positioning reference signal for the UE, and the UE transmits the uplink positioning reference signal according to the configuration of the uplink positioning reference signal.

In the air interface standard of Release 17, positioning for a Radio Resource Control (RRC) inactive UE is supported, that is, the UE can transmit an uplink positioning reference signal when in the RRC inactive state.

### SUMMARY

Embodiments of the present disclosure provide an information transmission method and apparatus, a communication device, and a storage medium.

According to a first aspect of the embodiments of the present disclosure, an information transmission method is provided, where the method is performed by a core network device and includes:
sending uplink positioning reference signal configuration information to an access network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

The sending uplink positioning reference signal configuration information to an access network device includes:
sending a Location Services (LCS) message carrying the uplink positioning reference signal configuration information to the access network device.

In an embodiment, the uplink positioning reference signal configuration information is sent to the UE by the access network device carried in at least one of:
a system message; or
an RRC message.

In an embodiment, the method further includes:
receiving first request information sent by a UE or an access network device;
where the sending uplink positioning reference signal configuration information includes:
determining that the first request information is received, and sending the uplink positioning reference signal configuration information.

In an embodiment, the receiving first request information sent by the UE includes at least one of:
receiving a Long Term Evolution Positioning Protocol (LPP) message carrying the first request information; or
receiving an LCS message carrying the first request information.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the method further includes: determining the uplink positioning reference signal configuration information based on at least one of the cell identifier information, the recommended configuration information, the recommended validity area information, or the request identifier.

In an embodiment, the uplink positioning reference signal configuration parameters include at least one of:
spatial relation information;
pathloss reference information; or
spatial relation information per uplink positioning reference signal resource.

According to a second aspect of the embodiments of the present disclosure, an information transmission method is provided, where the method is performed by an access network device and includes:
sending first request information for requesting uplink positioning reference signal configuration information to a core network device.

In an embodiment, the method further includes:
receiving the uplink positioning reference signal configuration information sent by the core network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the method further includes:
sending the uplink positioning reference signal configuration information to a User Equipment (UE).

In an embodiment, the sending the uplink positioning reference signal configuration information to the UE includes at least one of:
sending a system message carrying the uplink positioning reference signal configuration information to the UE; or
sending a Radio Resource Control (RRC) message carrying the uplink positioning reference signal configuration information to the UE.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the method further includes:
receiving second request information sent by a User Equipment (UE);
where the sending first request information for requesting uplink positioning reference signal configuration information to the core network device includes:
determining that the second request information is received, and sending the first request information to the core network device.

In an embodiment, the second request information includes at least one of:
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the uplink positioning reference signal configuration parameters include at least one of:
spatial relation information;
pathloss reference information; or
spatial relation information per uplink positioning reference signal resource.

According to a third aspect of the embodiments of the present disclosure, an information transmission method is provided, where the method is performed by a User Equipment (UE) and includes:
sending first request information for requesting uplink positioning reference signal configuration information to a core network device.

In an embodiment, the method further includes:
receiving the uplink positioning reference signal configuration information sent by an access network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
the validity area information corresponding to each uplink positioning reference signal configuration parameter in the same set of uplink positioning reference signal configuration parameters is different or the same.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the receiving the uplink positioning reference signal configuration information sent by the access network device includes at least one of:
receiving the uplink positioning reference signal configuration information transparently transmitted by the core network device through the access network device; or
receiving the uplink positioning reference signal configuration information sent by the access network device, where the uplink positioning reference signal configuration information is sent by the core network device to the access network device.

In an embodiment, the receiving the uplink positioning reference signal configuration information sent by the access network device includes at least one of:
receiving a system message carrying the uplink positioning reference signal configuration information and sent by the access network device; or
receiving a Radio Resource Control (RRC) message carrying the uplink positioning reference signal configuration information and sent by the access network device.

In an embodiment, the sending first request information for requesting the uplink positioning reference signal configuration information to the core network device includes:
sending second request information for requesting the uplink positioning reference signal configuration information to the access network device, where the second request information is used to trigger the access network device to send the first request information to the core network device.

In an embodiment, the second request information includes at least one of:
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the first request information is carried in at least one of:
a Long Term Evolution Positioning Protocol (LPP) message; or
a Location Services (LCS) message.

In an embodiment, the uplink positioning reference signal configuration information is carried in an LCS message.

In an embodiment, the uplink positioning reference signal configuration parameters include at least one of:
spatial relation information;
pathloss reference information; or
spatial relation information per uplink positioning reference signal resource.

According to a fourth aspect of the embodiments of the present disclosure, an information transmission apparatus is provided, where the apparatus is arranged in a core network device and includes:
a transceiver module, configured to send uplink positioning reference signal configuration information to an access network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the transceiver module is specifically configured to send a Location Services (LCS) message carrying the uplink positioning reference signal configuration information to the access network device.

In an embodiment, the uplink positioning reference signal configuration information is sent to the UE by the access network device carried in at least one of:
a system message; or
an RRC message.

In an embodiment, the transceiver module is further configured to:
receive first request information sent by a UE or an access network device;
the transceiver module is specifically configured to: determine that the first request information is received, and send the uplink positioning reference signal configuration information.

In an embodiment, the transceiver module is specifically configured to perform at least one of:
receiving a Long Term Evolution Positioning Protocol (LPP) message carrying the first request information; or
receiving an LCS message carrying the first request information.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the apparatus further includes: a processing module, configured to determine the uplink positioning reference signal configuration information based on at least one of the cell identifier information, the recommended configuration information, the recommended validity area information, or the request identifier.

In an embodiment, the uplink positioning reference signal configuration parameters include at least one of:
spatial relation information;
pathloss reference information; or
spatial relation information per uplink positioning reference signal resource.

According to a fifth aspect of the embodiments of the present disclosure, an information transmission apparatus is provided, where the apparatus is arranged in an access network device and includes:
a transceiver module, configured to send first request information for requesting uplink positioning reference signal configuration information to a core network device.

In an embodiment, the transceiver module is further configured to:
receive the uplink positioning reference signal configuration information sent by the core network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the transceiver module is further configured to:
send the uplink positioning reference signal configuration information to a User Equipment (UE).

In an embodiment, the transceiver module is specifically configured to perform at least one of:
sending a system message carrying the uplink positioning reference signal configuration information to the UE; or
sending a Radio Resource Control (RRC) message carrying the uplink positioning reference signal configuration information to the UE.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the transceiver module is further configured to:
receive second request information sent by a User Equipment (UE);
the transceiver module is specifically configured to:
determine that the second request information is received, and send the first request information to the core network device.

In an embodiment, the second request information includes at least one of:
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the uplink positioning reference signal configuration parameters include at least one of:
spatial relation information;
pathloss reference information; or
spatial relation information per uplink positioning reference signal resource.

According to a sixth aspect of the embodiments of the present disclosure, an information transmission apparatus is provided, where the apparatus is arranged in a User Equipment (UE) and includes:
a transceiver module, configured to send first request information for requesting uplink positioning reference signal configuration information to a core network device.

In an embodiment, the transceiver module is further configured to:
receive uplink positioning reference signal configuration information sent by an access network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
the plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the transceiver module is specifically configured to perform at least one of:
receiving the uplink positioning reference signal configuration information transparently transmitted by the core network device through the access network device; or
receiving the uplink positioning reference signal configuration information sent by the access network device, where the uplink positioning reference signal configuration information is sent by the core network device to the access network device.

In an embodiment, the transceiver module is specifically configured to perform at least one of:
receiving a system message carrying the uplink positioning reference signal configuration information and sent by the access network device; or
receiving a Radio Resource Control (RRC) message carrying the uplink positioning reference signal configuration information and sent by the access network device.

In an embodiment, the transceiver module is specifically configured to:
send second request information for requesting the uplink positioning reference signal configuration information to the access network device, where the second request information is used to trigger the access network device to send the first request information to the core network device.

In an embodiment, the second request information includes at least one of:
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

In an embodiment, the first request information is carried in at least one of:
a Long Term Evolution Positioning Protocol (LPP) message; or
a Location Services (LCS) message.

In an embodiment, the uplink positioning reference signal configuration information is carried in an LCS message.

In an embodiment, the uplink positioning reference signal configuration parameters include at least one of:
spatial relation information;
pathloss reference information; or
spatial relation information per uplink positioning reference signal resource.

According to a seventh aspect of the embodiments of the present disclosure, a communication device is provided, including a processor, a transceiver, a memory, and an executable program stored in the memory and executable by the processor, where the processor, when executing the executable program, performs the information transmission method according to any one of the first aspect, the second aspect, or the third aspect.

According to an eighth aspect of the embodiments of the present disclosure, a computer storage medium is provided, where the computer storage medium stores an executable program; after the executable program is executed by a processor, the information transmission method according to any one of the first aspect, the second aspect, or the third aspect is implemented.

The information transmission method, apparatus, communication device, and storage medium provided by the embodiments of the present disclosure. The core network device sends one or more pieces of uplink positioning reference signal configuration information to an access network device, where the one or more pieces of uplink positioning reference signal configuration information are used to indicate uplink positioning reference signal configuration parameters and validity area information associated with the uplink positioning reference signal configuration parameters. In this way, when the core network device sends the uplink positioning reference signal configuration parameters, it also indicates the validity area information of the uplink positioning reference signal configuration parameters. A network device that uses the uplink positioning reference signal configuration parameters to transmit the uplink positioning reference signal can determine the validity area information of the uplink positioning reference signal configuration parameters, and effective uplink positioning reference signal configuration parameters can be used in different areas, reducing the probability of transmitting uplink positioning reference signals with incorrect configurations and improving the accuracy of uplink positioning reference signals.

Regarding the technical solutions provided by the embodiments of the present disclosure, it should be understood that the foregoing general description and the following detailed description are exemplary and explanatory only and are not restrictive of the embodiments of the present disclosure.

### BRIEF DESCRIPTION OF THE DRAWINGS

The drawings, which are incorporated in and constitute a part of this specification, illustrate embodiments consistent with the present invention and, together with the description, serve to explain the principles of the embodiments of the present invention.
FIG. 1 is a schematic structural diagram of a wireless communication system according to an embodiment;
FIG. 2 is a schematic flowchart of an information transmission method according to an embodiment;
FIG. 3 is a schematic flowchart of an information transmission method according to an embodiment;
FIG. 4 is a schematic flowchart of an information transmission method according to an embodiment;
FIG. 5 is a schematic flowchart of an information transmission method according to an embodiment;
FIG. 6 is a schematic flowchart of an information transmission method according to an embodiment;
FIG. 7 is a schematic flowchart of an information transmission method according to an embodiment;
FIG. 8 is a schematic flowchart of an information transmission method according to an embodiment;
FIG. 9 is a schematic flowchart of an information transmission method according to an embodiment;
FIG. 10 is a schematic flowchart of an information transmission method according to an embodiment;
FIG. 11 is a schematic structural diagram of an information transmission apparatus according to an embodiment;
FIG. 12 is a schematic structural diagram of an information transmission apparatus according to an embodiment;
FIG. 13 is a schematic structural diagram of an information transmission apparatus according to an embodiment;
FIG. 14 is a schematic structural diagram of a UE according to an embodiment; and
FIG. 15 is a schematic structural diagram of a communication device according to an embodiment.

### DETAILED DESCRIPTION

Exemplary embodiments will be described in detail here, examples of which are illustrated in the drawings. When the following description refers to the drawings, the same numbers in different drawings denote the same or similar elements unless otherwise indicated. The implementations described in the following embodiments do not represent all implementations consistent with the embodiments of the present invention. Rather, they are merely examples of apparatuses and methods consistent with some aspects of the embodiments of the present invention.

The terms used in the embodiments of the present disclosure are for the purpose of describing particular embodiments only and are not intended to limit the embodiments of the present disclosure. The singular forms "a", "the", and "this" used in the present disclosure are also intended to include plural forms, unless the context clearly indicates otherwise. The term "and/or" as used herein refers to and includes any and all possible combinations of one or more of the associated listed items.

It should be understood that although terms such as first, second, third, etc. may be used in the embodiments of the present disclosure to describe various information, such information should not be limited by these terms. These terms are only used to distinguish information of the same type from one another. For example, without departing from the scope of the embodiments of the present disclosure, first information may also be referred to as second information, and similarly, second information may also be referred to as first information. Depending on the context, the word "if" as used herein may be interpreted as "when", "upon", or "in response to determining".

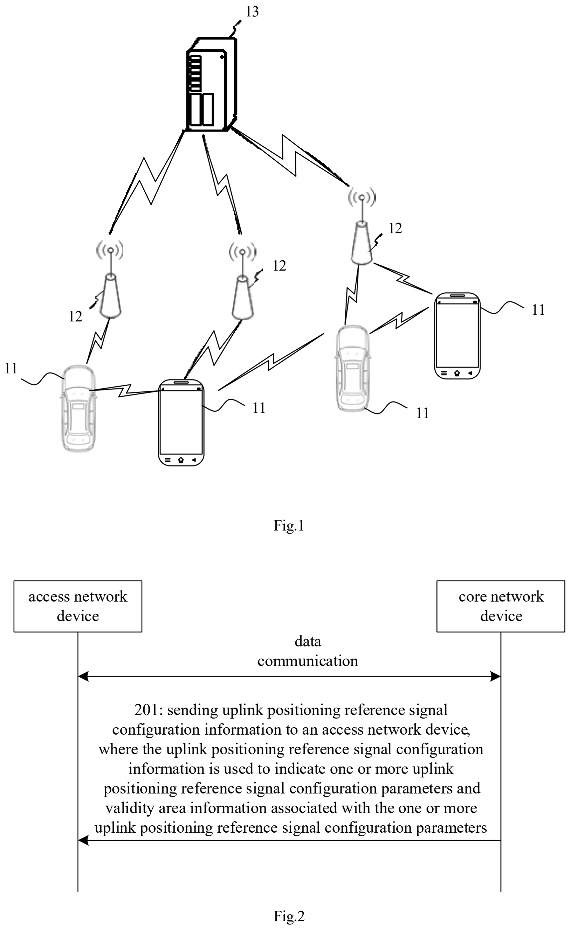

Please refer to FIG. 1, which shows a schematic structural diagram of a wireless communication system according to an embodiment of the present disclosure. As shown in FIG. 1, the wireless communication system is a communication system based on cellular mobile communication technology, and the wireless communication system may include: several UEs 11 and several network devices 12.

The wireless communication system may be a fourth-generation mobile communication technology (the 4th generation mobile communication, 4G) system, also known as a Long Term Evolution (LTE) system; or, the wireless communication system may be a 5G system, also known as a new radio (NR) system or a 5G NR system. Alternatively, the wireless communication system may be a next-generation system after the 5G system. The access network in the 5G system may be referred to as NG-RAN (New Generation-Radio Access Network). Alternatively, it may be an MTC system.

The UE 11 may refer to a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone), or a computer with an IoT UE, and may be, for example, a stationary, portable, pocket-sized, handheld, computer-built-in, or vehicle-mounted device. For example, it may be a Station (STA), a subscriber unit, a subscriber station, a mobile station, a mobile, a remote station, an access point, a remote terminal, an access terminal, a user terminal, a user agent, a user device, or user equipment (UE). Alternatively, the UE 11 may also be a device of an unmanned aerial vehicle. Or, the UE 11 may also be a vehicle-mounted device, for example, it may be a driving computer with wireless communication functions, or a wireless communication device externally connected to a driving computer. Or, the UE 11 may also be a roadside device, for example, it may be a street lamp, traffic light, or other roadside device with wireless communication functions.

The network device 12 may include an access network device. Optionally, the network device 12 may also include a core network device. The access network device may be an evolved NodeB (eNB) used in a 4G system. Or, it may also be an access device (gNB) using a centralized distributed architecture in a 5G system. When the access network device adopts a centralized distributed architecture, it usually includes a central unit (CU) and at least two distributed units (DUs). A protocol stack of the Packet Data Convergence Protocol (PDCP) layer, Radio Link Control (RLC) layer, and Media Access Control (MAC) layer is set in the central unit; a protocol stack of the Physical (PHY) layer is set in the distributed unit. The specific implementation of the access network device is not limited in the embodiments of the present disclosure.

A wireless connection may be established between the network device 12 and the UE 11 through a wireless air interface. In different implementations, the wireless air interface is a wireless air interface based on the fourth-generation mobile communication network technology (4G) standard; or, the wireless air interface is a wireless air interface based on the fifth-generation mobile communication network technology (5G) standard, for example, the wireless air interface is a new radio (NR) air interface; or, the wireless air interface may also be a wireless air interface based on a next-generation mobile communication network technology standard after 5G.

When the gNB transitions the UE from the RRC connected state to the RRC inactive state, it configures an uplink positioning reference signal for the UE through an RRC release (RRC release) message. The detailed configuration is contained in srs-PosRRC-InactiveConfig, and it stipulates that if the UE performs cell reselection, the UE needs to release the uplink positioning reference signal configured by the gNB.

Here, the uplink positioning reference signal includes: an Uplink Sounding Reference Signal (UL-SRS), which may also be referred to as a Sounding Reference Signal (SRS). The configuration parameters of the SRS include but are not limited to at least one of the following:
SRS resource set;
SRS resource;
spatialRelationInfoPos, indicating the spatial relationship between a reference signal (reference RS) and a target SRS; that is, determining the transmission beam of the target SRS based on the reference RS;
pathlossReferenceRS-Pos, a reference signal used to calculate the path loss of the SRS.

Here, spatialRelationInfoPos and pathlossReferenceRS-Pos are related to the cell that measures the SRS transmitted by the UE. For example: which gNB/Transmission and Reception Point (TRP) measures the SRS transmitted by the UE, the reference signal (reference RS) or reference signal may be the reference signal of that cell. gNB/TRP measures the SRS transmitted by the UE is determined by the Location Management Function (LMF), therefore, the above spatialRelationInfoPos and pathlossReferenceRS-Pos are sent by the LMF to the gNB through an NRPPa message. The LMF usually requests TRPs or gNBs near the UE to measure the SRS transmitted by the UE, therefore, spatialRelationInfoPos and pathlossReferenceRS-Pos are also related to the location of the UE.

The LMF can send its recommended configuration parameters for the SRS to the gNB through a PRS INFORMATION REQUEST, for example: Spatial Relation Information; Pathloss Reference Information; Spatial Relation Information per SRS Resource, etc.

In low power high accuracy positioning (LPHAP), for uplink positioning reference signals, a validity area is introduced. When the configured uplink positioning reference signal is associated with a validity area, if the UE reselects to another cell that is also within the validity area, then the UE can continue to transmit the SRS.

For uplink positioning reference signal configurations associated with a validity area, the configuration parameters of the uplink positioning reference signal (such as Spatial Relation Information, Pathloss Reference Information, Spatial Relation Information per SRS Resource, etc.) may also need to change as the serving cell of the UE changes.

Therefore, how the LMF configures the uplink positioning reference signal configuration parameters associated with the validity area is an urgent problem to be solved.

As shown in FIG. 2, an embodiment of the present disclosure provides an information transmission method, where the method is performed by a core network device and includes:
Step 201: sending uplink positioning reference signal configuration information to an access network device, where the uplink positioning reference signal configuration information is used to indicate one or more uplink positioning reference signal configuration parameters and validity area information associated with the one or more uplink positioning reference signal configuration parameters.

Here, the core network device includes but is not limited to: a Location Management Function (LMF) of the core network.

The uplink positioning reference signal may include: a Sounding Reference Signal (SRS). The uplink positioning reference signal configuration parameters may include configuration parameters of the SRS.

The uplink positioning reference signal configuration parameters may be used for the UE to transmit the uplink positioning reference signal.

The UE may be in an RRC connected state, an RRC inactive state, or an RRC idle state, which is not limited herein.

In an embodiment, the uplink positioning reference signal configuration parameters may be configuration parameters with a validity area. That is, the uplink positioning reference signal configuration parameters may be configuration parameters that are valid in a specific area.

The validity area information may be used to indicate the validity area of the uplink positioning reference signal configuration parameters. That is, the uplink positioning reference signal configuration parameters are valid within the validity area indicated by the validity area information.

The validity area may be at least one of the following: a geographical location area; a coverage area of a communication network, such as a cell, etc.

In an embodiment, the core network device may send the uplink positioning reference signal configuration information based on a request from the access network device or the UE.

In an embodiment, in response to receiving a request from the access network device, send the uplink positioning reference signal configuration information to the access network device.

In an embodiment, the core network device may send the uplink positioning reference signal configuration information to the access network device. The uplink positioning reference signal configuration information may be sent by the access network device to the UE.

For example, the core network device may send the uplink positioning reference signal configuration information to the access network device after the UE completes initial access. The access network device then sends the uplink positioning reference signal configuration information to the UE.

In an embodiment, in response to receiving a request from the UE, the uplink positioning reference signal configuration information is sent to the UE.

In an embodiment, the uplink positioning reference signal configuration information is used to indicate one or more sets of uplink positioning reference signal configuration parameters, and the one or more sets of uplink positioning reference signal configuration parameters include respectively at least one of the one or more uplink positioning reference signal configuration parameters.

In an embodiment, a set of uplink positioning reference signal configuration parameters may be a complete set of uplink positioning reference signal configuration parameters, and the UE may transmit the uplink positioning reference signal based on a set of uplink positioning reference signal configuration parameters.

In an embodiment, the uplink positioning reference signal configuration parameters include at least one of:
spatial relation information;
pathloss reference information; or
spatial relation information per uplink positioning reference signal resource.

Here, the spatial relation information is used to indicate the spatial relationship between a reference signal (reference RS) and the uplink positioning reference signal.

The pathloss reference information is used to calculate the path loss for the SRS path loss.

In this way, when the core network device sends the uplink positioning reference signal configuration parameters, it also indicates the validity area information of the uplink positioning reference signal configuration parameters. The UE can determine the uplink positioning reference signal configuration parameters for different cells according to the uplink positioning reference signal configuration parameters and the associated validity area, thereby avoiding frequent configuration of uplink positioning reference signals when the UE moves between different cells, reducing signaling overhead and positioning delay.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

Here, a set of uplink positioning reference signal configuration parameters may be a complete set of uplink positioning reference signal configuration parameters, and the UE may transmit the uplink positioning reference signal based on a set of uplink positioning reference signal configuration parameters.

A set of uplink positioning reference signal configuration parameters may correspond to one piece of validity area information. The validity area information of respective sets of the uplink positioning reference signal configuration parameters may be different.

The validity area corresponding to the uplink positioning reference signal configuration parameters may include one or more cells. That is, the validity area information corresponding to the uplink positioning reference signal configuration parameters may indicate one or more cells.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

A set of uplink positioning reference signal configuration parameters may be a complete set of uplink positioning reference signal configuration parameters, and the UE may transmit the uplink positioning reference signal based on a set of uplink positioning reference signal configuration parameters. A set of uplink positioning reference signal configuration parameters may include multiple different uplink positioning reference signal configuration parameters. For example: a set of uplink positioning reference signal configuration parameters may include spatial relation information; pathloss reference information; spatial relation information per uplink positioning reference signal resource, and other uplink positioning reference signal configuration parameters.

In an embodiment, the plurality of uplink positioning reference signal configuration parameters in a respective set of uplink positioning reference signal configuration parameters correspond to the same validity area information among the one or more pieces of validity area information.

In an embodiment, the plurality of uplink positioning reference signal configuration parameters in a respective set of uplink positioning reference signal configuration parameters correspond to different validity area information among the one or more pieces of validity area information.

In an embodiment, the validity area information corresponding to the uplink positioning reference signal configuration parameters in a respective set of the uplink positioning reference signal configuration parameters are not entirely the same.

For example, the uplink positioning reference signal configuration parameters include spatial relation information and pathloss reference information, etc. Among them, the spatial relation information corresponding to the uplink positioning reference signal resource in the uplink positioning reference signal configuration parameters corresponds to validity area information 1, and other parameters in the uplink positioning reference signal configuration parameters correspond to validity area information 2, where validity area information 1 and validity area information 2 are different.

In an embodiment, the validity area information includes at least one cell identifier.

Here, the validity area information may be one or more cell identifiers. One cell identifier may be used to uniquely identify a cell.

For example, the validity area information may be a Physical Cell Identifier list (PCI list).

For example, the uplink positioning reference signal configuration information is used to indicate the uplink positioning reference signal configuration parameters and at least one cell identifier associated with the uplink positioning reference signal configuration parameters. That is, the uplink positioning reference signal configuration parameters are valid within the cell identified by the cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the uplink positioning reference signal configuration information may indicate one or more sets of uplink positioning reference signal configuration parameters, and each set of uplink positioning reference signal configuration parameters corresponds to one or more cell identifiers respectively.

In an embodiment, the uplink positioning reference signal configuration parameters indicated by the uplink positioning reference signal configuration information may be indexed by cell identifiers. The uplink positioning reference signal configuration information indicates one or more cell identifiers, and each cell identifier corresponds to one or more sets of uplink positioning reference signal configuration parameters.

Each uplink positioning reference signal configuration parameter in each set of the uplink positioning reference signal configuration parameters may correspond to at least one cell identifier respectively.

In an embodiment, the cell identifiers corresponding to the uplink positioning reference signal configuration parameters in a respective set of the uplink positioning reference signal configuration parameters are the same.

In an embodiment, the cell identifiers corresponding to the uplink positioning reference signal configuration parameters in a respective set of the uplink positioning reference signal configuration parameters are different.

In an embodiment, the cell identifiers corresponding to the uplink positioning reference signal configuration parameters in a respective set of the uplink positioning reference signal configuration parameters are not entirely the same.

In an embodiment, the sending uplink positioning reference signal configuration information to an access network device includes at least one of:
sending the uplink positioning reference signal configuration information to the access network device for transparent transmission to a User Equipment (UE) by the access network device; or
sending the uplink positioning reference signal configuration information to the access network device, where the uplink positioning reference signal configuration information is sent by the access network device to the UE.

For example, the core network device may carry the uplink positioning reference signal configuration information in an LPP message and transmit it transparently to the UE.

In an embodiment, the sending the uplink positioning reference signal configuration information to the access network device includes:
sending a Location Services (LCS) message carrying the uplink positioning reference signal configuration information to the access network device.

Here, the LCS message may be transparently transmitted to the UE by the core network device through the access network device.

In an embodiment, the core network device sends the uplink positioning reference signal configuration information to the UE in a transparent transmission manner, which may be requested by the UE from the core network device through an LPP message.

In an embodiment, the core network device sends the uplink positioning reference signal configuration information to the access network device, and the access network device sends the uplink positioning reference signal configuration information received from the core network device to the UE.

In an embodiment, the core network device sends an NRPPa message carrying the uplink positioning reference signal configuration information to the access network device.

In an embodiment, the uplink positioning reference signal configuration information is sent to the UE by the access network device carried in at least one of:
a system message; or
an RRC message.

For example, after receiving the uplink positioning reference signal configuration information sent by the core network device, the access network device may carry the uplink positioning reference signal configuration information in a system message and broadcast it to the UE. After receiving the uplink positioning reference signal configuration information sent by the core network device, the access network device may also carry the uplink positioning reference signal configuration information in an RRC message and send it to the UE.

In an embodiment, the uplink positioning reference signal configuration information sent by the core network device to the access network device may be requested by the access network device from the core network device, or may be requested by the UE from the core network device.

In an embodiment, the uplink positioning reference signal configuration information sent by the core network device to the access network device may be requested by the access network device from the core network device based on a trigger from the UE.

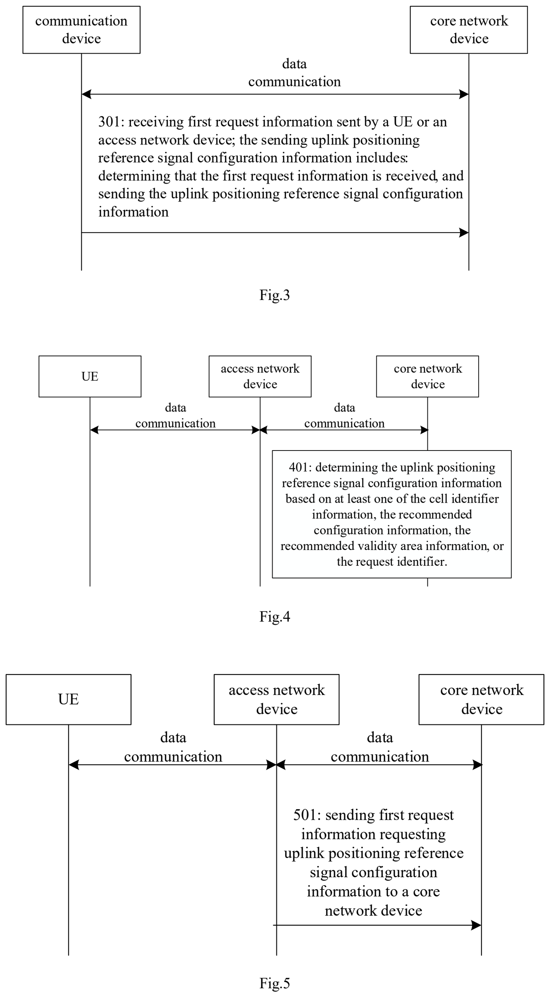

As shown in FIG. 3, an embodiment of the present disclosure provides an information transmission method, where the method is performed by a core network device and includes:
Step 301: receiving first request information sent by a UE or an access network device;
the sending uplink positioning reference signal configuration information includes:
determining that the first request information is received, and sending the uplink positioning reference signal configuration information.

In an embodiment, the core network device may receive first request information sent by the UE and transparently transmitted by the access network device. After determining that the first request information sent by the UE and transparently transmitted by the access network device is received, the core network device may send the uplink positioning reference signal configuration information to the UE based on the first request information.

Here, the core network device sending the uplink positioning reference signal configuration information to the UE based on the first request information may include at least one of:
the core network device sending to the UE the uplink positioning reference signal configuration information transparently transmitted through the access network device based on the first request information; or
the core network device sending the uplink positioning reference signal configuration information to the access network device based on the first request information, for example, through an NRPPa message, and the access network device sending the uplink positioning reference signal configuration information to the UE, for example, through an RRC message or a system message.

In an embodiment, the receiving first request information sent by the UE includes at least one of:
receiving a Long Term Evolution Positioning Protocol (LPP) message carrying the first request information; or
receiving a Location Services (LCS) message carrying the first request information.

In an embodiment, the core network device may receive first request information sent by the access network device, and may send the uplink positioning reference signal configuration information to the access network device based on the first request information. After determining that the first request information sent by the access network device is received, the core network device may also send the uplink positioning reference signal configuration information to the UE based on the first request information.

In an embodiment, the UE may send second request information to the access network device to request uplink positioning reference signal configuration information. After receiving the second request information, the access network device may send first request information to the core network device.

In an embodiment, the first request information includes at least one of:
cell identifier information, indicating a current serving cell of the UE;
recommended configuration information, indicating a recommended uplink positioning reference signal configuration parameter;
a request identifier, indicating a requested uplink positioning reference signal configuration parameter and/or validity area information corresponding to a requested uplink positioning reference signal configuration parameter; or
recommended validity area information, indicating recommended validity area information of an uplink positioning reference signal.

As shown in FIG. 4, an embodiment of the present disclosure provides an information transmission method, where the method is performed by a core network device and includes:
Step 401: determining the uplink positioning reference signal configuration information based on at least one of the cell identifier information, the recommended configuration information, the recommended validity area information, or the request identifier.

The cell identifier information is used to indicate the current serving cell of the UE. The core network device may determine neighbor cells that may be used for UE positioning and/or cells that the UE may enter based on the current serving cell of the UE, and then determine the uplink positioning reference signal configuration parameters for the neighbor cells used for UE positioning and/or the uplink positioning reference signal configuration parameters for the cells that the UE may enter.

The recommended configuration information may be used to indicate the uplink positioning reference signal configuration parameters recommended by the access network device and/or the UE to the core network device. The core network device may determine whether to adopt the recommended uplink positioning reference signal configuration parameters based on one of the following:
the capability of the access network device;
the capability of the UE;
Resource Occupancy Status of Uplink Positioning Reference Signals
A request identifier may be used to request uplink positioning reference signal configuration parameters with associated validity area information.

The request identifier may be used to indicate uplink positioning reference signal configuration parameters requested by the access network device and/or the UE from the core network device.

For example, the access network device and/or the UE may request one or more uplink positioning reference signal configuration parameters; the access network device and/or the UE may also request one or more sets of uplink positioning reference signal configuration parameters. The core network device may determine the requested uplink positioning reference signal configuration parameters based on the request identifier.

The request identifier may also be used to indicate validity area information corresponding to the uplink positioning reference signal configuration parameters requested by the access network device and/or the UE from the core network device.

Here, the validity area information indicated by the request identifier includes, but is not limited to, one of the following:
geographical location area information;
coverage area of a communication network, such as a cell, etc.

The core network device may, based on the request identifier, determine the uplink positioning reference signal configuration parameters corresponding to the requested validity area information.

Recommended validity area information may also be used to indicate validity area information corresponding to uplink positioning reference signal configuration parameters recommended by the access network device and/or the UE to the core network device.

Here, the validity area information indicated by the recommended validity area information includes, but is not limited to, one of the following:
geographical location area information;
coverage area of a communication network, such as a cell, etc.

The core network device may determine whether to adopt the recommended validity area information based on one of the following:
the location status of the UE;
the mobility status of the UE;
the resource occupancy status of the recommended validity area information.

In an embodiment, the uplink positioning reference signal configuration parameters requested and/or recommended in the first request information may be indicated using identifiers and/or indexes associated with the uplink positioning reference signal configuration parameters.

As shown in FIG. 5, an embodiment of the present disclosure provides an information transmission method, performed by an access network device, including:
Step 501: sending first request information requesting uplink positioning reference signal configuration information to a core network device.

Here, the core network device includes, but is not limited to: a Location Management Function (LMF) of the core network.

In an embodiment, the uplink positioning reference signal configuration information is at least used to indicate uplink positioning reference signal configuration parameters.

The uplink positioning reference signal may include: a Sounding Reference Signal (SRS). The uplink positioning reference signal configuration parameters may include configuration parameters of the SRS.

The uplink positioning reference signal configuration parameters may be used by the UE to transmit the uplink positioning reference signal.

The UE may be in an RRC connected state, or may be in an RRC inactive state or an RRC idle state, which is not limited herein.

In an embodiment, the core network device may receive the first request information sent by the access network device. After determining that the first request information transparently transmitted by the access network device is received, the core network device may send uplink positioning reference signal configuration information to the access network device based on the first request information. After determining that the first request information sent by the access network device is received, the core network device may also send uplink positioning reference signal configuration information to the UE based on the first request information.

In an embodiment, the first request information is sent based on second request information sent by the UE.

In an embodiment, the first request information is sent by the access network device.

In an embodiment, the first request information includes at least one of the following:
cell identifier information, indicating a current serving cell of the UE;
recommended configuration information, indicating recommended uplink positioning reference signal configuration parameters;
a request identifier, indicating requested uplink positioning reference signal configuration parameters and/or validity area information corresponding to the requested uplink positioning reference signal configuration parameters;
recommended validity area information, indicating recommended validity area information of the uplink positioning reference signal.

The cell identifier information is used to indicate the current serving cell of the UE. The core network device may determine neighbor cells that may be used for UE positioning and/or cells that the UE may enter based on the current serving cell of the UE, and further determine uplink positioning reference signal configuration parameters for the neighbor cells used for UE positioning and/or uplink positioning reference signal configuration parameters for the cells that the UE may enter.

The recommended configuration information may be used to indicate uplink positioning reference signal configuration parameters recommended by the access network device and/or the UE to the core network device.

The request identifier may be used to request uplink positioning reference signal configuration parameters with associated validity area information.

The request identifier may also be used to indicate uplink positioning reference signal configuration parameters requested by the access network device from the core network device.

For example, the access network device may request one or more uplink positioning reference signal configuration parameters; the access network device may also request one or more sets of uplink positioning reference signal configuration parameters. The request identifier may also be used to indicate validity area information corresponding to the uplink positioning reference signal configuration parameters requested by the access network device from the core network device.

Here, the validity area information indicated by the request identifier includes, but is not limited to, one of the following:
geographical location area information;
coverage area of a communication network, such as a cell, etc.

The core network device may, based on the request identifier, determine the uplink positioning reference signal configuration parameters corresponding to the requested validity area information.

The recommended validity area information may also be used to indicate validity area information corresponding to uplink positioning reference signal configuration parameters recommended by the access network device to the core network device.

Here, the validity area information indicated by the recommended validity area information includes, but is not limited to, one of the following:
geographical location area information;
coverage area of a communication network, such as a cell, etc.

In an embodiment, the uplink positioning reference signal configuration parameters requested and/or recommended in the first request information may be indicated using identifiers and/or indexes associated with the uplink positioning reference signal configuration parameters.

In an embodiment, the uplink positioning reference signal configuration parameters include at least one of the following:
Spatial Relation Information;
Pathloss Reference Information;
Spatial Relation Information per SRS Resource.

Here, the spatial relation information is used to indicate a spatial relationship between a reference signal (reference RS) and the uplink positioning reference signal.

The pathloss reference information is used to calculate the pathloss for SRS pathloss calculation.

In this way, the access network device can request uplink positioning reference signal configuration information from the core network device based on its own needs, and is not limited to the core network device sending the uplink positioning reference signal configuration information, thereby improving the flexibility of obtaining uplink positioning reference signal configuration information.

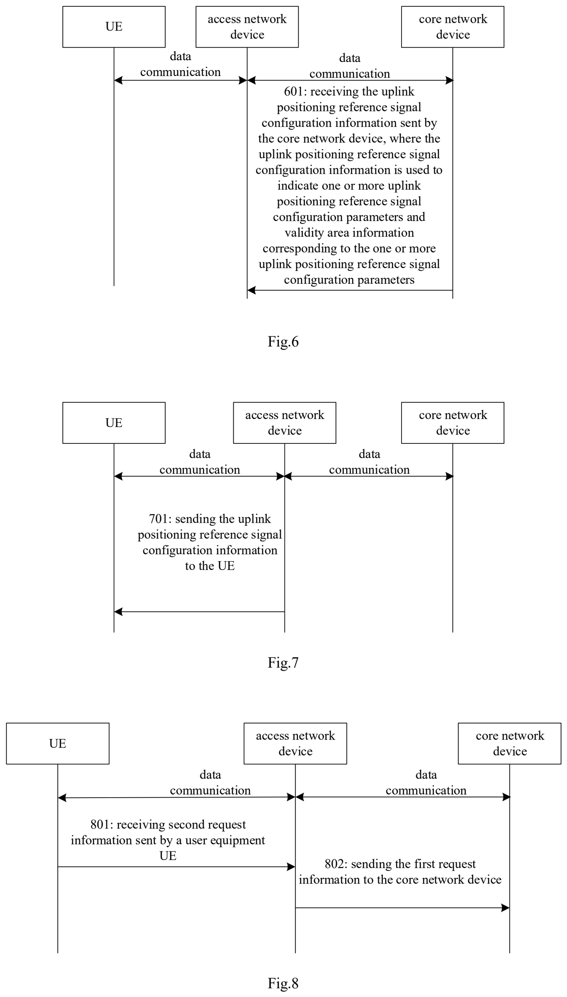

As shown in FIG. 6, an embodiment of the present disclosure provides an information transmission method, performed by an access network device, including:
Step 601: receiving the uplink positioning reference signal configuration information sent by the core network device, where the uplink positioning reference signal configuration information is used to indicate one or more uplink positioning reference signal configuration parameters and validity area information corresponding to the one or more uplink positioning reference signal configuration parameters.

In an embodiment, the access network device receives an NRPPa message sent by the core network device that carries the uplink positioning reference signal configuration information.

In an embodiment, the uplink positioning reference signal configuration parameters may be configuration parameters with a validity area. That is, the uplink positioning reference signal configuration parameters may be configuration parameters that are valid within a specific area.

The validity area information may be used to indicate the validity area of the uplink positioning reference signal configuration parameters. That is, the uplink positioning reference signal configuration parameters are valid within the validity area indicated by the validity area information.

The validity area may be at least one of the following: a geographical location area; a coverage area of a communication network, such as a cell, etc.

In an embodiment, the access network device receives the uplink positioning reference signal configuration information sent by the core network device to the access network device in response to receiving a request from the UE.

In an embodiment, the access network device receives the uplink positioning reference signal configuration information sent by the core network device to the access network device in response to receiving a request from the access network device.

In an embodiment, the uplink positioning reference signal configuration information is used to indicate one or more sets of uplink positioning reference signal configuration parameters. A set of uplink positioning reference signal configuration parameters may include at least one uplink positioning reference signal configuration parameter.

In an embodiment, a set of uplink positioning reference signal configuration parameters may be a complete set of uplink positioning reference signal configuration parameters, and the UE may transmit the uplink positioning reference signal based on a set of uplink positioning reference signal configuration parameters.

In this way, the access network device receives the uplink positioning reference signal configuration parameters sent by the core network device and also receives the validity area information that can determine the validity area of the uplink positioning reference signal configuration parameters. Based on the uplink positioning reference signal configuration parameters and the associated validity area, the uplink positioning reference signal configuration parameters for different cells can be determined, thereby avoiding frequent configuration of uplink positioning reference signals when the UE moves between different cells, reducing signaling overhead and positioning latency.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

Here, a set of uplink positioning reference signal configuration parameters may be a complete set of uplink positioning reference signal configuration parameters, and the UE may transmit the uplink positioning reference signal based on a set of uplink positioning reference signal configuration parameters.

A set of uplink positioning reference signal configuration parameters may correspond to one piece of validity area information. The validity area information for respective sets of the uplink positioning reference signal configuration parameters may be different.

The validity area corresponding to the uplink positioning reference signal configuration parameters may include one or more cells. That is, the validity area information corresponding to the uplink positioning reference signal configuration parameters may indicate one or more cells.

In an embodiment, where the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

A set of uplink positioning reference signal configuration parameters may be a complete set of uplink positioning reference signal configuration parameters, and the UE may transmit the uplink positioning reference signal based on a set of uplink positioning reference signal configuration parameters. A set of uplink positioning reference signal configuration parameters may include multiple different uplink positioning reference signal configuration parameters. For example: a set of uplink positioning reference signal configuration parameters may include Spatial Relation Information; Pathloss Reference Information; Spatial Relation Information per SRS Resource, and other uplink positioning reference signal configuration parameters.

In an embodiment, the validity area information corresponding respectively to the uplink positioning reference signal configuration parameters in a respective set of the uplink positioning reference signal configuration parameters are the same.

In an embodiment, the validity area information corresponding respectively to the uplink positioning reference signal configuration parameters in a respective set of the uplink positioning reference signal configuration parameters are different.

In an embodiment, the validity area information corresponding respectively to the uplink positioning reference signal configuration parameters in a respective set of the uplink positioning reference signal configuration parameters are not entirely the same.

For example, the uplink positioning reference signal configuration parameters include Spatial Relation Information and Pathloss Reference Information, etc. Among them, the spatial relation information corresponding to the uplink positioning reference signal resources in the uplink positioning reference signal configuration parameters corresponds to validity area information 1, and other parameters in the uplink positioning reference signal configuration parameters correspond to validity area information 2, where validity area information 1 and validity area information 2 are different.

In an embodiment, the validity area information includes at least one cell identifier.

Here, the validity area information may be one or more cell identifiers. One cell identifier may be used to uniquely identify a cell.

For example, the validity area information may be a Physical Cell Identifier list (PCI list).

For example, the uplink positioning reference signal configuration information is used to indicate the uplink positioning reference signal configuration parameters and at least one cell identifier associated with the uplink positioning reference signal configuration parameters. That is, the uplink positioning reference signal configuration parameters are valid within the cell(s) identified by the cell identifier(s).

In an embodiment, the uplink positioning reference signal configuration information is used to indicate one of the following:
one or more cell identifiers corresponding respectively to the one or more sets of uplink positioning reference signal configuration parameters;
one or more cell identifiers, and one or more sets of the uplink positioning reference signal configuration parameters corresponding to each of the cell identifiers respectively;
one or more cell identifiers corresponding to each of the uplink positioning reference signal configuration parameters in each set of the uplink positioning reference signal configuration parameters.

In an embodiment, the uplink positioning reference signal configuration information may indicate one or more sets of uplink positioning reference signal configuration parameters, and each set of uplink positioning reference signal configuration parameters corresponds to one or more cell identifiers respectively.

In an embodiment, the uplink positioning reference signal configuration parameters indicated by the uplink positioning reference signal configuration information may be indexed using cell identifiers. The uplink positioning reference signal configuration information indicates one or more cell identifiers, and each cell identifier corresponds to one or more sets of uplink positioning reference signal configuration parameters.

Each of the uplink positioning reference signal configuration parameters in each set of the uplink positioning reference signal configuration parameters may correspond to at least one cell identifier respectively.

In an embodiment, the cell identifiers corresponding to the uplink positioning reference signal configuration parameters in a respective set of the uplink positioning reference signal configuration parameters are the same.

In an embodiment, the cell identifiers corresponding to the uplink positioning reference signal configuration parameters in a respective set of the uplink positioning reference signal configuration parameters are different.

In an embodiment, the cell identifiers corresponding to the uplink positioning reference signal configuration parameters in a respective set of the uplink positioning reference signal configuration parameters are not entirely the same.

As shown in FIG. 7, an embodiment of the present disclosure provides an information transmission method, performed by an access network device, including:
Step 701: sending the uplink positioning reference signal configuration information to the UE.

In an embodiment, after receiving the uplink positioning reference signal configuration information sent by the core network device to the access network device, the access network device may send the uplink positioning reference signal configuration information received from the core network device to the UE.

In an embodiment, after receiving the uplink positioning reference signal configuration information sent by the core network device to the access network device, the access network device may send it to the UE.

In an embodiment, after receiving the uplink positioning reference signal configuration information sent by the core network device to the access network device, the access network device may send it to the UE based on a request from the UE. For example, the access network device may send the uplink positioning reference signal configuration information to the UE based on second request information sent by the UE.

In an embodiment, the sending the uplink positioning reference signal configuration information to the UE includes at least one of the following:
sending a system message carrying the uplink positioning reference signal configuration information to the UE;
sending an RRC message carrying the uplink positioning reference signal configuration information to the UE.

For example, after receiving the uplink positioning reference signal configuration information sent by the core network device, the access network device may broadcast the uplink positioning reference signal configuration information to the UE in a system message. After receiving the uplink positioning reference signal configuration information sent by the core network device, the access network device may also send the uplink positioning reference signal configuration information to the UE in an RRC message.

In an embodiment, the uplink positioning reference signal configuration information sent by the core network device to the access network device may be requested by the access network device, or may be requested by the UE from the core network device.

In an embodiment, the uplink positioning reference signal configuration information sent by the core network device to the access network device may be requested by the access network device from the core network device triggered by the UE.

In an embodiment, the access network device may receive second request information sent by the user equipment UE; the access network device sends the uplink positioning reference signal configuration information to the UE based on the second request information.

In an embodiment, the access network device may not request uplink positioning reference signal configuration information from the core network device, and the access network device determines the uplink positioning reference signal configuration information.

Specifically, after receiving the second request information, the access network device may determine the uplink positioning reference signal configuration parameters and the validity area information corresponding to the uplink positioning reference signal configuration parameters, and send them to the UE via the uplink positioning reference signal configuration information.

In an embodiment, the access network device obtains uplink positioning reference signal configuration parameters of current neighbor cells of the UE. For example, the access network device may obtain uplink positioning reference signal configuration parameters of neighbor cells via an interface between access network devices. And send them to the UE via the uplink positioning reference signal configuration information.

In an embodiment, the access network device may send the uplink positioning reference signal configuration information to the UE. For example, the access network device may send the uplink positioning reference signal configuration information to the UE after the UE completes initial access.

As shown in FIG. 8, an embodiment of the present disclosure provides an information transmission method, performed by an access network device, including:
Step 801: receiving second request information sent by a user equipment UE;
Step 802: sending the first request information to the core network device.

In an embodiment, the access network device determines that the second request information is received, and sends the first request information to the core network device.

In an embodiment, the UE may send second request information to the access network device to request uplink positioning reference signal configuration information. After receiving the second request information, the access network device may send first request information to the core network device.

In an embodiment, the second request information includes at least one of the following:
recommended configuration information, indicating recommended uplink positioning reference signal configuration parameters;
a request identifier, indicating requested uplink positioning reference signal configuration parameters and/or validity area information corresponding to the requested uplink positioning reference signal configuration parameters;
recommended validity area information, indicating recommended validity area information of the uplink positioning reference signal.

In an embodiment, the uplink positioning reference signal configuration parameters include at least one of:
spatial relation information;
pathloss reference information; or
spatial relation information per uplink positioning reference signal resource.

The content indicated by the second request information is similar to that indicated by the first request information, which will not be repeated here.

The access network device may determine the first request information based on the second request information.

For example, if part of the content requested in the second request information can be sent directly to the UE by the access network device, then that content may not be requested again in the first request information.

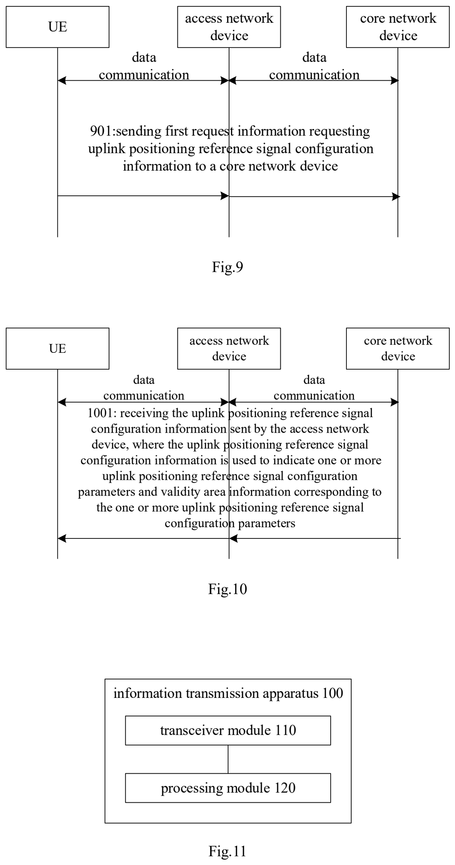

As shown in FIG. 9, an embodiment of the present disclosure provides an information transmission method, performed by a UE, including:
Step 901: sending first request information requesting uplink positioning reference signal configuration information to a core network device.

Here, the core network device includes, but is not limited to: a Location Management Function (LMF) of the core network.

In an embodiment, the uplink positioning reference signal configuration information is at least used to indicate uplink positioning reference signal configuration parameters.

The uplink positioning reference signal may include: a Sounding Reference Signal (SRS). The uplink positioning reference signal configuration parameters may include configuration parameters of the SRS.

The uplink positioning reference signal configuration parameters may be used by the UE to transmit the uplink positioning reference signal.

The UE may be in an RRC connected state, or may be in an RRC inactive state, or an RRC idle state, which is not limited herein.

In an embodiment, the UE sends the first request information transparently transmitted to the core network device via the access network device. After determining that the first request information sent by the UE and transparently transmitted by the access network device is received, the core network device may send uplink positioning reference signal configuration information to the UE based on the first request information. The UE may receive the uplink positioning reference signal configuration information sent by the core network device based on the first request information.

Here, the UE receiving the uplink positioning reference signal configuration information sent by the core network device based on the first request information may include at least one of the following:
the UE receives the uplink positioning reference signal configuration information sent by the core network device based on the first request information and transparently transmitted by the access network device;
the UE receives the uplink positioning reference signal configuration information sent by the access network device, for example, via an RRC message or a system message, where the uplink positioning reference signal configuration information sent by the access network device is sent by the core network device to the access network device based on the first request information, for example, via an NRPPa message.

In an embodiment, the first request information is carried in at least one of the following:
a Long Term Evolution Positioning Protocol (LPP) message;
a Location Services (LCS) message.

In an embodiment, the first request information includes at least one of the following:
cell identifier information, indicating a current serving cell of the UE;
recommended configuration information, indicating recommended uplink positioning reference signal configuration parameters;
a request identifier, indicating requested uplink positioning reference signal configuration parameters and/or validity area information corresponding to the requested uplink positioning reference signal configuration parameters;
recommended validity area information, indicating recommended validity area information of the uplink positioning reference signal.

The cell identifier information is used to indicate the current serving cell of the UE. The core network device may determine neighbor cells that may be used for UE positioning and/or cells that the UE may enter based on the current serving cell of the UE, and further determine uplink positioning reference signal configuration parameters for the neighbor cells used for UE positioning and/or uplink positioning reference signal configuration parameters for the cells that the UE may enter.

The recommended configuration information may be used to indicate uplink positioning reference signal configuration parameters recommended by the UE to the core network device. The core network device may determine whether to adopt the recommended uplink positioning reference signal configuration parameters based on one of the following:
the capability of the access network device;
the capability of the UE;
the resource occupancy status of the uplink positioning reference signal.

The request identifier may be used to request uplink positioning reference signal configuration parameters with associated validity area information.

The request identifier may be used to indicate uplink positioning reference signal configuration parameters requested by the UE from the core network device.

For example, the UE may request one or more uplink positioning reference signal configuration parameters; the UE may also request one or more sets of uplink positioning reference signal configuration parameters. The core network device may determine the requested uplink positioning reference signal configuration parameters based on the request identifier.

The request identifier may also be used to indicate validity area information corresponding to the uplink positioning reference signal configuration parameters requested by the UE from the core network device.

Here, the validity area information indicated by the request identifier includes, but is not limited to, one of the following:
geographical location area information;
coverage area of a communication network, such as a cell, etc.

The core network device may, based on the request identifier, determine the uplink positioning reference signal configuration parameters corresponding to the requested validity area information.

The recommended validity area information may also be used to indicate validity area information corresponding to uplink positioning reference signal configuration parameters recommended by the UE to the core network device.

Here, the validity area information indicated by the recommended validity area information includes, but is not limited to, one of the following:
geographical location area information;
coverage area of a communication network, such as a cell, etc.

The core network device may determine whether to adopt the recommended validity area information based on one of the following:
the location status of the UE;
the mobility status of the UE;
the resource occupancy status of the recommended validity area information.

In an embodiment, the uplink positioning reference signal configuration parameters requested and/or recommended in the first request information may be indicated using identifiers and/or indexes associated with the uplink positioning reference signal configuration parameters.

In an embodiment, the uplink positioning reference signal configuration parameters include at least one of the following:
Spatial Relation Information;
Pathloss Reference Information;
Spatial Relation Information per SRS Resource.

Here, the spatial relation information is used to indicate a spatial relationship between a reference signal (reference RS) and the uplink positioning reference signal.

The pathloss reference information is used to calculate the pathloss for SRS pathloss calculation.

In this way, the UE can request uplink positioning reference signal configuration information from the core network device based on its own needs, and is not limited to the core network device sending the uplink positioning reference signal configuration information, thereby improving the flexibility of obtaining uplink positioning reference signal configuration information.

As shown in FIG. 10, an embodiment of the present disclosure provides an information transmission method, performed by a UE, including:
Step 1001: receiving the uplink positioning reference signal configuration information sent by the access network device, where the uplink positioning reference signal configuration information is used to indicate one or more uplink positioning reference signal configuration parameters and validity area information corresponding to the one or more uplink positioning reference signal configuration parameters.

In an embodiment, the uplink positioning reference signal configuration parameters may be configuration parameters with a validity area. That is, the uplink positioning reference signal configuration parameters may be configuration parameters that are valid within a specific area.

The validity area information may be used to indicate the validity area of the uplink positioning reference signal configuration parameters. That is, the uplink positioning reference signal configuration parameters are valid within the validity area indicated by the validity area information.

The validity area may be at least one of the following: a geographical location area; a coverage area of a communication network, such as a cell, etc.

In an embodiment, the uplink positioning reference signal configuration information received by the UE is sent to the UE by the core network based on a request from the access network device.

In an embodiment, the uplink positioning reference signal configuration information received by the UE may be sent to the UE by the access network device and/or the core network device in response to receiving a request from the UE.

In an embodiment, the uplink positioning reference signal configuration information is used to indicate one or more sets of uplink positioning reference signal configuration parameters. A set of uplink positioning reference signal configuration parameters may include at least one uplink positioning reference signal configuration parameter.

In an embodiment, a set of uplink positioning reference signal configuration parameters may be a complete set of uplink positioning reference signal configuration parameters, and the UE may transmit the uplink positioning reference signal based on a set of uplink positioning reference signal configuration parameters.

In this way, the uplink positioning reference signal configuration information received by the UE simultaneously indicates the uplink positioning reference signal configuration parameters and the validity area information of the uplink positioning reference signal configuration parameters. The UE can determine the uplink positioning reference signal configuration parameters for different cells based on the uplink positioning reference signal configuration parameters and the associated validity area, thereby avoiding frequent configuration of uplink positioning reference signals when the UE moves between different cells, reducing signaling overhead and positioning latency.

In an embodiment, the uplink positioning reference signal configuration information is used to indicate one or more sets of the uplink positioning reference signal configuration parameters, where the one or more sets of uplink positioning reference signal configuration parameters are associated respectively with one or more pieces of validity area information, and the one or more sets of uplink positioning reference signal configuration parameters include respectively at least one of the one or more uplink positioning reference signal configuration parameters.

Here, a set of uplink positioning reference signal configuration parameters may be a complete set of uplink positioning reference signal configuration parameters, and the UE may transmit the uplink positioning reference signal based on a set of uplink positioning reference signal configuration parameters.

A set of uplink positioning reference signal configuration parameters may correspond to one piece of validity area information. The validity area information for respective sets of the uplink positioning reference signal configuration parameters may be different.

The validity area corresponding to the uplink positioning reference signal configuration parameters may include one or more cells. That is, the validity area information corresponding to the uplink positioning reference signal configuration parameters may indicate one or more cells.

In an embodiment, where the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

A set of uplink positioning reference signal configuration parameters may be a complete set of uplink positioning reference signal configuration parameters, and the UE may transmit the uplink positioning reference signal based on a set of uplink positioning reference signal configuration parameters. A set of uplink positioning reference signal configuration parameters may include multiple different uplink positioning reference signal configuration parameters. For example: a set of uplink positioning reference signal configuration parameters may include Spatial Relation Information; Pathloss Reference Information; Spatial Relation Information per SRS Resource, and other uplink positioning reference signal configuration parameters.

In an embodiment, the validity area information corresponding respectively to the uplink positioning reference signal configuration parameters in a respective set of the uplink positioning reference signal configuration parameters are the same.

In an embodiment, the validity area information corresponding respectively to the uplink positioning reference signal configuration parameters in a respective set of the uplink positioning reference signal configuration parameters are different.

In an embodiment, the validity area information corresponding respectively to the uplink positioning reference signal configuration parameters in a respective set of the uplink positioning reference signal configuration parameters are not entirely the same.

For example, the uplink positioning reference signal configuration parameters include Spatial Relation Information and Pathloss Reference Information, etc. Among them, the spatial relation information corresponding to the uplink positioning reference signal resources in the uplink positioning reference signal configuration parameters corresponds to validity area information 1, and other parameters in the uplink positioning reference signal configuration parameters correspond to validity area information 2, where validity area information 1 and validity area information 2 are different.

In an embodiment, the validity area information includes at least one cell identifier.

Here, the validity area information may be one or more cell identifiers. One cell identifier may be used to uniquely identify a cell.

For example, the validity area information may be a Physical Cell Identifier list (PCI list).

For example, the uplink positioning reference signal configuration information is used to indicate the uplink positioning reference signal configuration parameters and at least one cell identifier associated with the uplink positioning reference signal configuration parameters. That is, the uplink positioning reference signal configuration parameters are valid within the cell(s) identified by the cell identifier(s).

In an embodiment, the uplink positioning reference signal configuration information is used to indicate one of the following: one or more cell identifiers corresponding respectively to the one or more sets of uplink positioning reference signal configuration parameters;
one or more cell identifiers, and one or more sets of the uplink positioning reference signal configuration parameters corresponding to each of the cell identifiers respectively;
one or more cell identifiers corresponding to each of the uplink positioning reference signal configuration parameters in each set of the uplink positioning reference signal configuration parameters.

In an embodiment, the uplink positioning reference signal configuration information may indicate one or more sets of uplink positioning reference signal configuration parameters, and each set of uplink positioning reference signal configuration parameters corresponds to one or more cell identifiers respectively.

In an embodiment, the uplink positioning reference signal configuration parameters indicated by the uplink positioning reference signal configuration information may be indexed using cell identifiers. The uplink positioning reference signal configuration information indicates one or more cell identifiers, and each cell identifier corresponds to one or more sets of uplink positioning reference signal configuration parameters.

Each of the uplink positioning reference signal configuration parameters in each set of the uplink positioning reference signal configuration parameters may correspond to at least one cell identifier respectively.

In an embodiment, the cell identifiers corresponding to the uplink positioning reference signal configuration parameters in a respective set of the uplink positioning reference signal configuration parameters are the same.

In an embodiment, the cell identifiers corresponding to the uplink positioning reference signal configuration parameters in a respective set of the uplink positioning reference signal configuration parameters are different.

In an embodiment, the cell identifiers corresponding to the uplink positioning reference signal configuration parameters in a respective set of the uplink positioning reference signal configuration parameters are not entirely the same.

In an embodiment, the receiving the uplink positioning reference signal configuration information sent by the access network device includes at least one of the following:
receiving the uplink positioning reference signal configuration information transparently transmitted by the core network device through the access network device;
receiving the uplink positioning reference signal configuration information sent by the access network device, where the uplink positioning reference signal configuration information is sent by the core network device to the access network device.

In an embodiment, the core network device may send the uplink positioning reference signal configuration information to the UE via transparent transmission through the access network device.

For example, the core network device may carry the uplink positioning reference signal configuration information in an LPP message and transparently transmit it to the UE.

In an embodiment, the uplink positioning reference signal configuration information is carried in an LCS message.

In an embodiment, the core network device sending the uplink positioning reference signal configuration information to the UE via transparent transmission may be in response to a request from the UE via an LPP message.

In an embodiment, the core network device sends the uplink positioning reference signal configuration information to the access network device, and the access network device sends the uplink positioning reference signal configuration information received from the core network device to the UE.

In an embodiment, the core network device sends an NRPPa message carrying the uplink positioning reference signal configuration information to the access network device.

In an embodiment, the receiving the uplink positioning reference signal configuration information sent by the access network device includes at least one of the following:
receiving a system message carrying the uplink positioning reference signal configuration information sent by the access network device;
receiving an RRC message carrying the uplink positioning reference signal configuration information sent by the access network device.

For example, after receiving the uplink positioning reference signal configuration information sent by the core network device, the access network device may broadcast the uplink positioning reference signal configuration information to the UE in a system message. After receiving the uplink positioning reference signal configuration information sent by the core network device, the access network device may also send the uplink positioning reference signal configuration information to the UE in an RRC message.

In an embodiment, the uplink positioning reference signal configuration information sent by the core network device to the access network device may be requested by the access network device, or may be requested by the UE from the core network device.

In an embodiment, the uplink positioning reference signal configuration information sent by the core network device to the access network device may be requested by the access network device from the core network device triggered by the UE.

In an embodiment, the sending first request information requesting the uplink positioning reference signal configuration information to the core network device includes:
sending second request information requesting the uplink positioning reference signal configuration information to the access network device, where the second request information is used to trigger the access network device to send the first request information to the core network device.

In an embodiment, the UE may send second request information to the access network device to request uplink positioning reference signal configuration information. After receiving the second request information, the access network device may send first request information to the core network device.

In an embodiment, the second request information includes at least one of the following:
recommended configuration information, indicating recommended uplink positioning reference signal configuration parameters;
a request identifier, indicating requested uplink positioning reference signal configuration parameters and/or validity area information corresponding to the requested uplink positioning reference signal configuration parameters;
recommended validity area information, indicating recommended validity area information of the uplink positioning reference signal.

The content indicated by the second request information is similar to that indicated by the first request information, which will not be repeated here.

The access network device may determine the first request information based on the second request information.

For example, if part of the content requested in the second request information can be sent directly to the UE by the access network device, then that content may not be requested again in the first request information.

The following provides several specific examples in combination with any of the above embodiments:

### Example 1:

1. The LMF provides one or more sets of uplink positioning reference signal configuration parameters to the gNB, including: Spatial Relation Information, Pathloss Reference Information, Spatial Relation Information per SRS Resource, etc. The uplink positioning reference signal configuration parameters are associated with at least one cell identifier. That is, the LMF sends to the gNB uplink positioning reference signal configuration information indicating the uplink positioning reference signal configuration parameters and the validity area information associated with the uplink positioning reference signal configuration parameters.
2. The gNB requests uplink positioning reference signal configuration parameters from the LMF, and may include the serving cell identifier of the UE.
3. The UE requests uplink positioning reference signal configuration parameters from the gNB or the LMF. When requesting from the LMF, it may include the serving cell identifier of the UE.
4. The gNB broadcasts the aforementioned uplink positioning reference signal configuration parameters and the at least one cell identifier associated with the uplink positioning reference signal configuration parameters in a system message. The gNB broadcasts in a system message the uplink positioning reference signal configuration information indicating the uplink positioning reference signal configuration parameters and the validity area information associated with the uplink positioning reference signal configuration parameters.

### Example 2:

1. The LMF provides one or more sets of uplink positioning reference signal configuration parameters to the gNB, where the uplink positioning reference signal configuration parameters are associated with at least one cell identifier;
2. The uplink positioning reference signal configuration parameters include one of the following:
   - Spatial Relation Information;
   - Pathloss Reference Information;
   - Spatial Relation Information per SRS Resource;
   - Validity area information associated with the uplink positioning reference signal configuration parameters.
3. The cell identifier is one of the cells in the validity area.
4. The LMF sends the uplink positioning reference signal configuration parameters to the gNB via an NRPPa message.
5. The gNB sends the one or more sets of uplink positioning reference signal configuration parameters to the UE, where the uplink positioning reference signal configuration parameters are associated with at least one cell identifier.
6. The gNB sends the uplink positioning reference signal configuration parameters via a system message or an RRC message.

### Example 3:

1. The gNB requests uplink positioning reference signal configuration parameters from the LMF; that is, sends first request information.
2. The uplink positioning reference signal configuration parameters include one of the following:
   - Spatial Relation Information;
   - Pathloss Reference Information;
   - Spatial Relation Information per SRS Resource;
   - Validity area information associated with the uplink positioning reference signal configuration parameters.
3. The first request information includes the serving cell identifier of the UE.
4. The first request information includes recommended SRS configuration parameters.
5. The LMF sends the requested uplink positioning reference signal configuration parameters to the gNB.
6. The uplink positioning reference signal configuration parameters are associated with at least one cell identifier.
7. When the uplink positioning reference signal configuration parameters sent by the LMF include a validity area, they are not associated with a cell identifier.
8. The gNB sends the first request information to the LMF based on receiving an uplink positioning reference signal request (second request information) sent by the UE.

### Example 4:

1. The UE requests uplink positioning reference signal configuration parameters from the LMF; that is, sends first request information.
2. The uplink positioning reference signal configuration parameters include one of the following:
   - Spatial Relation Information;
   - Pathloss Reference Information;
   - Spatial Relation Information per SRS Resource;
   - Validity area information associated with the uplink positioning reference signal configuration parameters.
3. The first request information includes the serving cell identifier of the UE and/or uplink reference signal configuration parameters (identifier/index);
4. The UE sends the request via an LPP message or an LCS message (event report);
5. The LMF sends the requested uplink positioning reference signal configuration parameters to the UE via an LCS message;
6. The LMF requests the gNB to configure uplink positioning reference signals for the UE, where the request includes the uplink positioning reference signal configuration parameters requested by the UE, and may include uplink reference signal configuration parameters (identifier/index).

### Example 5:

The core network device sends uplink positioning reference signal configuration information to the access network device. After receiving it, the access network device may send the uplink positioning reference signal configuration information to the UE. The uplink positioning reference signal configuration information is used to indicate one or more uplink positioning reference signal configuration parameters and validity area information associated with the one or more uplink positioning reference signal configuration parameters.

For example, the core network device may send the uplink positioning reference signal configuration information to the access network device after the UE completes initial access. The access network device then sends the uplink positioning reference signal configuration information to the UE.

In one example, after receiving the uplink positioning reference signal configuration information, the access network device may send it to the UE. For example, the access network device may send the uplink positioning reference signal configuration information to the UE after the UE completes initial access.

In one example, after receiving the uplink positioning reference signal configuration information, the access network device may send the received uplink positioning reference signal configuration information to the UE based on a request from the UE (such as the aforementioned second request information).

### Example 6:

The access network device may request uplink positioning reference signal configuration information from the core network device. The core network device may send the uplink positioning reference signal configuration information to the access network device based on the request from the access network device (such as the first request information sent by the access network device).

For example, the access network device may request uplink positioning reference signal configuration information from the core network device after the UE completes initial access.

In one example, after receiving the uplink positioning reference signal configuration information, the access network device may send it to the UE. For example, the access network device may send the uplink positioning reference signal configuration information to the UE after the UE completes initial access.

In one example, after receiving the uplink positioning reference signal configuration information, the access network device may send the received uplink positioning reference signal configuration information to the UE based on a request from the UE (such as the aforementioned second request information).

### Example 7:

The UE may request uplink positioning reference signal configuration information from the core network device. The core network device may send the uplink positioning reference signal configuration information to the access network device based on the request from the UE.

After receiving the uplink positioning reference signal configuration information, the access network device may send it to the UE.

### Example 8:

The UE may request uplink positioning reference signal configuration information from the access network device. The access network device may send a request to the core network device based on the request from the UE.

The core network device sends uplink positioning reference signal configuration information to the access network device based on a request from the access network device.

After receiving the uplink positioning reference signal configuration information, the access network device can send it to the UE.

As shown in FIG. 11, an embodiment of the present disclosure provides an information transmission apparatus 100, where the apparatus is arranged in a core network device and includes:
a transceiver module 110, configured to send uplink positioning reference signal configuration information to an access network device, where the uplink positioning reference signal configuration information is used to indicate one or more uplink positioning reference signal configuration parameters and validity area information associated with the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the transceiver module is specifically configured to send a location services (LCS) message carrying the uplink positioning reference signal configuration information to the access network device.

In an embodiment, the uplink positioning reference signal configuration information is sent by the access network device to the UE carried in at least one of the following:
a system message;
an RRC message.

In an embodiment, the transceiver module is further configured to:
receive first request information sent by a UE or an access network device;
the transceiver module is specifically configured to: determine that the first request information is received, and send the uplink positioning reference signal configuration information.

In an embodiment, the transceiver module is specifically configured to perform at least one of:
receiving a Long Term Evolution Positioning Protocol (LPP) message carrying the first request information; or
receiving an LCS message carrying the first request information.

In an embodiment, the first request information includes at least one of:
cell identifier information, used to indicate a current serving cell of the UE;
recommended configuration information, used to indicate a recommended uplink positioning reference signal configuration parameter;
a request identifier, used to indicate a requested uplink positioning reference signal configuration parameter and/or validity area information corresponding to a requested uplink positioning reference signal configuration parameter; or
recommended validity area information, used to indicate recommended validity area information of an uplink positioning reference signal.

In an embodiment, the apparatus further includes: a processing module 120, configured to determine the uplink positioning reference signal configuration information based on at least one of the cell identifier information, the recommended configuration information, the recommended validity area information, or the request identifier.

In an embodiment, the uplink positioning reference signal configuration parameters include at least one of:
spatial relation information;
pathloss reference information; or
spatial relation information per uplink positioning reference signal resource.

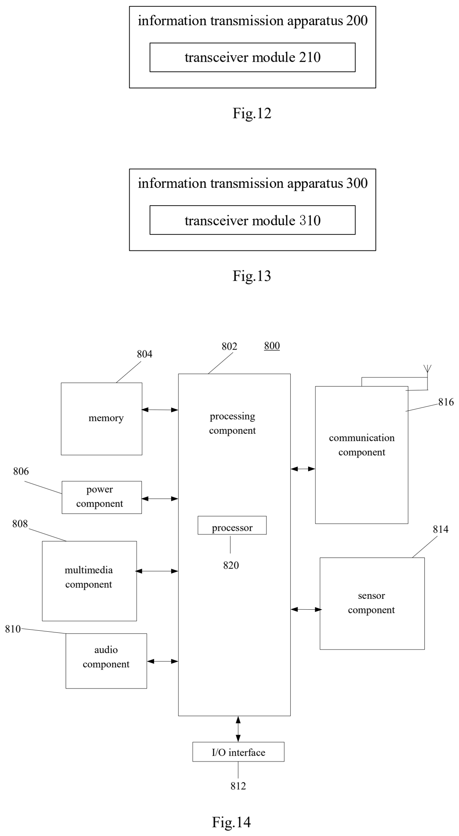

As shown in FIG. 12, an embodiment of the present disclosure provides an information transmission apparatus 200, where the apparatus is arranged in an access network device and includes:
a transceiver module 210, configured to send first request information for requesting uplink positioning reference signal configuration information to a core network device.

In an embodiment, the transceiver module is further configured to:
receive the uplink positioning reference signal configuration information sent by the core network device, where the uplink positioning reference signal configuration information is used to indicate one or more uplink positioning reference signal configuration parameters and validity area information corresponding to the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers; or
one or more cell identifiers corresponding respectively to the uplink positioning reference signal configuration parameters in a respective set of uplink positioning reference signal configuration parameters.

In an embodiment, the transceiver module is further configured to:
send the uplink positioning reference signal configuration information to a user equipment (UE).

In an embodiment, the transceiver module is specifically configured to perform at least one of:
sending a system message carrying the uplink positioning reference signal configuration information to the UE; or
sending a radio resource control (RRC) message carrying the uplink positioning reference signal configuration information to the UE.

In an embodiment, the first request information includes at least one of:
cell identifier information, used to indicate a current serving cell of the UE;
recommended configuration information, used to indicate a recommended uplink positioning reference signal configuration parameter;
a request identifier, used to indicate a requested uplink positioning reference signal configuration parameter and/or validity area information corresponding to a requested uplink positioning reference signal configuration parameter; or
recommended validity area information, used to indicate recommended validity area information of an uplink positioning reference signal.

In an embodiment, the transceiver module is further configured to:
receive second request information sent by a user equipment (UE),
the transceiver module is specifically configured to:
determine that the second request information is received, and send the first request information to the core network device.

In an embodiment, the second request information includes at least one of:
recommended configuration information, used to indicate a recommended uplink positioning reference signal configuration parameter;
a request identifier, used to indicate a requested uplink positioning reference signal configuration parameter and/or validity area information corresponding to a requested uplink positioning reference signal configuration parameter; or
recommended validity area information, used to indicate recommended validity area information of an uplink positioning reference signal.

In an embodiment, the uplink positioning reference signal configuration parameters include at least one of:
spatial relation information;
pathloss reference information; or
spatial relation information per uplink positioning reference signal resource.

As shown in FIG. 13, an embodiment of the present disclosure provides an information transmission apparatus 300, where the apparatus is arranged in a UE and includes:
a transceiver module 310, configured to send first request information for requesting uplink positioning reference signal configuration information to a core network device.

In an embodiment, the transceiver module is further configured to:
receive the uplink positioning reference signal configuration information sent by an access network device, where the uplink positioning reference signal configuration information is used to indicate one or more uplink positioning reference signal configuration parameters and validity area information corresponding to the one or more uplink positioning reference signal configuration parameters.

In an embodiment, the uplink positioning reference signal configuration information is used to indicate one or more sets of uplink positioning reference signal configuration parameters, the one or more sets of uplink positioning reference signal configuration parameters are associated respectively with one or more pieces of validity area information, where the one or more sets of uplink positioning reference signal configuration parameters include respectively at least one of the one or more uplink positioning reference signal configuration parameters.

In an embodiment, that the one or more sets of uplink positioning reference signal configuration parameters are associated respectively with one or more pieces of validity area information includes:
a plurality of uplink positioning reference signal configuration parameters in a respective set of uplink positioning reference signal configuration parameters correspond to different or the same validity area information among the one or more pieces of validity area information.

In an embodiment, the validity area information includes at least one cell identifier.

In an embodiment, the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers;
one or more cell identifiers corresponding respectively to the uplink positioning reference signal configuration parameters in a respective set of uplink positioning reference signal configuration parameters.

In an embodiment, the transceiver module is specifically configured to perform at least one of:
receiving the uplink positioning reference signal configuration information transparently transmitted by the access network device from the core network device; or
receiving the uplink positioning reference signal configuration information sent by the access network device, where the uplink positioning reference signal configuration information is sent by the core network device to the access network device.

In an embodiment, the transceiver module is specifically configured to perform at least one of:
receiving a system message carrying the uplink positioning reference signal configuration information and sent by the access network device; or
receiving a radio resource control (RRC) message carrying the uplink positioning reference signal configuration information and sent by the access network device.

In an embodiment, the transceiver module is specifically configured to:
send second request information for requesting the uplink positioning reference signal configuration information to the access network device, where the second request information is used to trigger the access network device to send the first request information to the core network device.

In an embodiment, the second request information includes at least one of:
recommended configuration information, used to indicate a recommended uplink positioning reference signal configuration parameter;
a request identifier, used to indicate a requested uplink positioning reference signal configuration parameter and/or validity area information corresponding to a requested uplink positioning reference signal configuration parameter; or
recommended validity area information, used to indicate recommended validity area information of an uplink positioning reference signal.

In an embodiment, the first request information includes at least one of:
cell identifier information, used to indicate a current serving cell of the UE;
recommended configuration information, used to indicate a recommended uplink positioning reference signal configuration parameter;
a request identifier, used to indicate a requested uplink positioning reference signal configuration parameter and/or validity area information corresponding to a requested uplink positioning reference signal configuration parameter; or
recommended validity area information, used to indicate recommended validity area information of an uplink positioning reference signal.

In an embodiment, the first request information is carried in at least one of:
a Long Term Evolution Positioning Protocol (LPP) message; or
a location services (LCS) message.

In an embodiment, the uplink positioning reference signal configuration information is carried in an LCS message.

In an embodiment, the uplink positioning reference signal configuration parameters include at least one of:
spatial relation information;
pathloss reference information; or
spatial relation information per uplink positioning reference signal resource.

An embodiment of the present disclosure provides a communication device, including:
a processor;
a memory for storing processor-executable instructions;
where the processor is configured to: when running the executable instructions, implement the information transmission method according to any embodiment of the present disclosure.

In an embodiment, the communication device can include, but is not limited to, at least one of: a network control relay and a network device. Here, the network device may include a core network or an access network device, etc. Here, the access network device may include an access network device; the core network may include an AMF, an SMF.

The processor may include various types of storage media, which are non-transitory computer storage media capable of continuing to remember the information stored thereon after the user equipment is powered off.

The processor can be connected to the memory via a bus or the like, for reading executable programs stored on the memory, for example, at least one of the methods shown in FIGS. 2 to 10.

An embodiment of the present disclosure also provides a computer storage medium, where the computer storage medium stores a computer-executable program, and the executable program, when executed by a processor, implements the information transmission method according to any embodiment of the present disclosure. For example, at least one of the methods shown in FIGS. 2 to 10.

Regarding the apparatus or storage medium in the above embodiments, the specific manner in which each module performs operations has been described in detail in the embodiments related to the method, and will not be elaborated here.

FIG. 14 is a block diagram of a UE 800 according to an embodiment. For example, UE 800 may be a mobile phone, a computer, a digital broadcast user equipment, a messaging device, a gaming console, a tablet device, a medical device, a fitness device, a personal digital assistant, etc.

Referring to FIG. 11, UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the UE 800, such as operations associated with display, phone calls, data communications, camera operations, and recording operations. The processing component 802 may include one or more processors 820 to execute instructions to perform all or part of the steps of the methods described above. Moreover, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the UE 800. Examples of such data include instructions for any application or method operating on the UE 800, contact data, phonebook data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the UE 800. The power component 806 may include a power management system, one or more power sources, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensors may not only sense the boundary of a touch or slide action, but also detect the duration and pressure associated with the touch or slide operation. In some embodiments, the multimedia component 808 includes a front camera and/or a rear camera. When the UE 800 is in an operation mode, such as a shooting mode or a video mode, the front camera and/or the rear camera can receive external multimedia data. Each front camera and rear camera can be a fixed optical lens system or have focal length and optical zoom capability.

The audio component 810 is configured to output and/or input audio signals. For example, the audio component 810 includes a microphone (MIC). When the UE 800 is in an operation mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules. The peripheral interface modules may be a keyboard, a click wheel, buttons, etc. These buttons may include, but are not limited to: a home button, a volume button, a start button, and a lock button.

The sensor component 814 includes one or more sensors for providing status assessment of various aspects of the UE 800. For example, the sensor component 814 may detect the open/close status of the device 800, the relative positioning of components, such as the display and keypad of the UE 800. The sensor component 814 may also detect a change in position of the UE 800 or a component of the UE 800, the presence or absence of user contact with the UE 800, the orientation or acceleration/deceleration of the UE 800, and the temperature change of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access a wireless network based on a communication standard, such as WiFi, 2G, or 3G, or a combination thereof. In an embodiment, the communication component 816 receives broadcast signals or broadcast related information from an external broadcast management system via a broadcast channel. In an embodiment, the communication component 816 further includes a near field communication (NFC) module to facilitate short-range communications. For example, the NFC module may be implemented based on radio frequency identification (RFID) technology, Infrared Data Association (IrDA) technology, ultra-wideband (UWB) technology, Bluetooth (BT) technology, and other technologies.

In an embodiment, the UE 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the methods described above.

In an embodiment, there is also provided a non-transitory computer-readable storage medium including instructions, such as the memory 804 including instructions, which may be executed by the processor 820 of the UE 800 to perform the methods described above. For example, the non-transitory computer-readable storage medium may be a ROM, a random access memory (RAM), a CD-ROM, a magnetic tape, a floppy disk, and an optical data storage device.

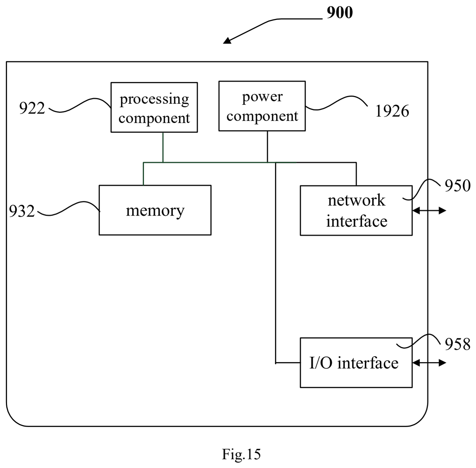

As shown in FIG. 15, an embodiment of the present disclosure shows a structure of an access device. For example, a communication device 900 may be provided as a network device. The communication device may be various network elements such as the aforementioned access network element and/or network function.

Referring to FIG. 15, the communication device 900 includes a processing component 922, which further includes one or more processors, and memory resources represented by a memory 932, for storing instructions executable by the processing component 922, such as applications. The applications stored in the memory 932 may include one or more modules, each corresponding to a set of instructions. Furthermore, the processing component 922 is configured to execute the instructions to perform any of the methods applied to the access device described above, for example, any of the methods shown in FIGS. 4 to 9.

The communication device 900 may further include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server^{®}, Mac OS X^{®}, Unix^{®}, Linux^{®}, FreeBSD^{®} or the like.

Without conflict, each step in a certain implementation or embodiment above may be implemented as an independent embodiment, and the steps may be arbitrarily combined. For example, a solution after removing some steps in a certain implementation or embodiment may also be implemented as an independent embodiment, and the order of the steps in a certain implementation or embodiment may be arbitrarily exchanged. In addition, optional methods or examples in a certain implementation or embodiment may be arbitrarily combined; furthermore, the implementations or embodiments may be arbitrarily combined. For example, some or all steps of different implementations or embodiments may be arbitrarily combined, and optional methods or examples of one implementation or embodiment may be arbitrarily combined with those of other implementations or embodiments.

Those skilled in the art, upon considering the specification and practicing the invention disclosed herein, will readily conceive of other embodiments of the present invention. This disclosure is intended to cover any variations, uses, or adaptive changes of the present invention. These variations, uses, or adaptive changes follow the general principles of the present invention and include common general knowledge or customary technical means in the technical field not disclosed in the present disclosure. The specification and examples are to be regarded as exemplary only, with the true scope and spirit of the invention being indicated by the following claims.

It should be understood that the present invention is not limited to the precise structure that has been described above and illustrated in the drawings, and that various modifications and changes may be made without departing from the scope thereof. The scope of the present invention is limited only by the appended claims.

## Claims

1. An information transmission method, performed by a core network device, comprising:
sending uplink positioning reference signal configuration information to an access network device, wherein the uplink positioning reference signal configuration information is used to indicate one or more uplink positioning reference signal configuration parameters and validity area information associated with the one or more uplink positioning reference signal configuration parameters.

2. The method according to claim 1, wherein the uplink positioning reference signal configuration information is used to indicate one or more sets of uplink positioning reference signal configuration parameters, the one or more sets of uplink positioning reference signal configuration parameters are associated respectively with one or more pieces of validity area information, wherein the one or more sets of uplink positioning reference signal configuration parameters comprise respectively at least one of the one or more uplink positioning reference signal configuration parameters.

3. The method according to claim 2, wherein that the one or more sets of uplink positioning reference signal configuration parameters are associated respectively with one or more pieces of validity area information comprises:
a plurality of uplink positioning reference signal configuration parameters in a respective set of uplink positioning reference signal configuration parameters correspond to different or the same validity area information among the one or more pieces of validity area information.

4. The method according to any one of claims 1 to 3, wherein the one or more pieces of validity area information comprise one or more cell identifiers.

5. The method according to any one of claims 1 to 4, wherein the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers;
one or more cell identifiers corresponding respectively to the uplink positioning reference signal configuration parameters in a respective set of uplink positioning reference signal configuration parameters.

6. The method according to any one of claims 1 to 5, wherein sending the uplink positioning reference signal configuration information to the access network device comprises:
sending a location services (LCS) message carrying the uplink positioning reference signal configuration information to the access network device.

7. The method according to any one of claims 1 to 6, further comprising:
receiving first request information sent by a user equipment (UE) or the access network device;
wherein sending the uplink positioning reference signal configuration information to the access network device comprises:
determining that the first request information is received, and sending the uplink positioning reference signal configuration information to the access network device.

8. The method according to claim 7, wherein receiving the first request information sent by the UE comprises at least one of:
receiving a long term evolution positioning protocol (LPP) message carrying the first request information; or
receiving an LCS message carrying the first request information.

9. The method according to claim 7, wherein the first request information comprises at least one of:
cell identifier information used to indicate a current serving cell of the UE;
recommended configuration information used to indicate a recommended uplink positioning reference signal configuration parameter;
a request identifier used to indicate a requested uplink positioning reference signal configuration parameter and/or the validity area information corresponding to a requested uplink positioning reference signal configuration parameter; or
recommended validity area information used to indicate recommended validity area information of uplink positioning reference signal.

10. The method according to claim 9, further comprising:
determining the uplink positioning reference signal configuration information based on at least one of the cell identifier information, the recommended configuration information, the recommended validity area information or the request identifier.

11. The method according to any one of claims 1 to 10, wherein the uplink positioning reference signal configuration parameters comprise at least one of:
spatial relation information;
pathloss reference information; or
spatial relation information per uplink positioning reference signal resource.

12. An information transmission method, performed by an access network device, comprising:
sending, to a core network device, first request information for requesting uplink positioning reference signal configuration information.

13. The method according to claim 12, further comprising:
receiving the uplink positioning reference signal configuration information sent by the core network device, wherein the uplink positioning reference signal configuration information is used to indicate one or more uplink positioning reference signal configuration parameters and validity area information associated with the one or more uplink positioning reference signal configuration parameters.

14. The method according to claim 13, wherein the uplink positioning reference signal configuration information is used to indicate one or more sets of uplink positioning reference signal configuration parameters, the one or more sets of uplink positioning reference signal configuration parameters are associated respectively with one or more pieces of validity area information, wherein the one or more sets of uplink positioning reference signal configuration parameters comprise respectively at least one of the one or more uplink positioning reference signal configuration parameters.

15. The method according to claim 14, wherein that the one or more sets of uplink positioning reference signal configuration parameters are associated respectively with one or more pieces of validity area information comprises:
a plurality of uplink positioning reference signal configuration parameters in a respective set of uplink positioning reference signal configuration parameters correspond to different or the same validity area information among the one or more pieces of validity area information.

16. The method according to any one of claims 13 to 15, wherein the one or more pieces of validity area information comprise one or more cell identifiers.

17. The method according to any one of claims 12 to 15, wherein the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers;
one or more cell identifiers corresponding respectively to the uplink positioning reference signal configuration parameters in a respective set of uplink positioning reference signal configuration parameters.

18. The method according to any one of claims 12 to 17, further comprising:
sending the uplink positioning reference signal configuration information to a user equipment (UE).

19. The method according to claim 18, wherein sending the uplink positioning reference signal configuration information to the UE comprises at least one of:
sending a system message carrying the uplink positioning reference signal configuration information to the UE; or
sending a radio resource control (RRC) message carrying the uplink positioning reference signal configuration information to the UE.

20. The method according to any one of claims 13 to 17, wherein the first request information comprises at least one of:
cell identifier information used to indicate a current serving cell of the UE;
recommended configuration information used to indicate a recommended uplink positioning reference signal configuration parameter;
a request identifier used to indicate a requested uplink positioning reference signal configuration parameter and/or the validity area information corresponding to a requested uplink positioning reference signal configuration parameter; or
recommended validity area information used to indicate recommended validity area information of uplink positioning reference signal.

21. The method according to any one of claims 13 to 20, further comprising:
receiving second request information sent by a UE;
wherein sending first request information requesting uplink positioning reference signal configuration information to the core network device comprises:
determining that the second request information is received, and sending the first request information to the core network device.

22. The method according to claim 21, wherein the second request information comprises at least one of:
recommended configuration information used to indicate a recommended uplink positioning reference signal configuration parameter;
a request identifier used to indicate a requested uplink positioning reference signal configuration parameter and/or the validity area information corresponding to a requested uplink positioning reference signal configuration parameter; or
recommended validity area information used to indicate recommended validity area information of uplink positioning reference signal.

23. The method according to any one of claims 13 to 22, wherein the uplink positioning reference signal configuration parameters comprise at least one of:
spatial relation information;
pathloss reference information; or
spatial relation information per uplink positioning reference signal resource.

24. An information transmission method, performed by a user equipment (UE), comprising:
sending, to a core network device, first request information for requesting uplink positioning reference signal configuration information.

25. The method according to claim 24, further comprising:
receiving the uplink positioning reference signal configuration information sent by an access network device, wherein the uplink positioning reference signal configuration information is used to indicate one or more uplink positioning reference signal configuration parameters and validity area information associated with the one or more uplink positioning reference signal configuration parameters.

26. The method according to claim 25, wherein the uplink positioning reference signal configuration information is used to indicate one or more sets of uplink positioning reference signal configuration parameters, the one or more sets of uplink positioning reference signal configuration parameters are associated respectively with one or more pieces of validity area information, wherein the one or more sets of uplink positioning reference signal configuration parameters comprise respectively at least one of the one or more uplink positioning reference signal configuration parameters.

27. The method according to claim 26, wherein that the one or more sets of uplink positioning reference signal configuration parameters are associated respectively with one or more pieces of validity area information comprises:
a plurality of uplink positioning reference signal configuration parameters in a respective set of uplink positioning reference signal configuration parameters correspond to different or the same validity area information among the one or more pieces of validity area information.

28. The method according to any one of claims 25 to 27, wherein the one or more pieces of validity area information comprise one or more cell identifiers.

29. The method according to any one of claims 25 to 27, wherein the uplink positioning reference signal configuration information is used to indicate one of:
one or more cell identifiers corresponding respectively to the one or more sets of uplink positioning reference signal configuration parameters;
one or more cell identifiers, and the one or more sets of uplink positioning reference signal configuration parameters corresponding respectively to the one or more cell identifiers;
one or more cell identifiers corresponding respectively to the uplink positioning reference signal configuration parameters in a respective set of uplink positioning reference signal configuration parameters.

30. The method according to any one of claims 25 to 29, wherein receiving uplink positioning reference signal configuration information sent by the access network device comprises at least one of:
receiving the uplink positioning reference signal configuration information sent by the core network device and transparently sent by the access network device;
receiving the uplink positioning reference signal configuration information sent by the access network device, wherein the uplink positioning reference signal configuration information is sent by the core network device to the access network device.

31. The method according to claim 30, wherein receiving the uplink positioning reference signal configuration information sent by the access network device comprises at least one of:
receiving a system message carrying the uplink positioning reference signal configuration information and sent by the access network device; or
receiving a radio resource control (RRC) message carrying the uplink positioning reference signal configuration information and sent by the access network device.

32. The method according to any one of claims 25 to 31, wherein sending first request information for requesting the uplink positioning reference signal configuration information to the core network device comprises:
sending second request information for requesting the uplink positioning reference signal configuration information to the access network device, wherein the second request information is used to trigger the access network device to send the first request information to the core network device.

33. The method according to claim 32, wherein the second request information comprises at least one of:
recommended configuration information used to indicate a recommended uplink positioning reference signal configuration parameter;
a request identifier used to indicate a requested uplink positioning reference signal configuration parameter and/or the validity area information corresponding to a requested uplink positioning reference signal configuration parameter; or
recommended validity area information used to indicate recommended validity area information of uplink positioning reference signal.

34. The method according to any one of claims 25 to 31, wherein the first request information comprises at least one of:
cell identifier information used to indicate a current serving cell of the UE;
recommended configuration information used to indicate a recommended uplink positioning reference signal configuration parameter;
a request identifier used to indicate a requested uplink positioning reference signal configuration parameter and/or the validity area information corresponding to a requested uplink positioning reference signal configuration parameter; or
recommended validity area information used to indicate recommended validity area information of uplink positioning reference signal.

35. The method according to any one of claims 25 to 31, wherein the first request information is carried in at least one of:
a long term evolution positioning protocol (LPP) message; or
a location services (LCS) message.

36. The method according to any one of claims 25 to 31, wherein the uplink positioning reference signal configuration information is carried in an LCS message.

37. The method according to any one of claims 25 to 36, wherein the uplink positioning reference signal configuration parameters comprise at least one of:
spatial relation information;
pathloss reference information; or
spatial relation information per uplink positioning reference signal resource.

38. An information transmission apparatus, arranged in a core network device, comprising:
a transceiver module configured to send uplink positioning reference signal configuration information to an access network device, wherein the uplink positioning reference signal configuration information is used to indicate one or more uplink positioning reference signal configuration parameters and validity area information associated with the one or more uplink positioning reference signal configuration parameters.

39. An information transmission apparatus, arranged in an access network device, comprising:
a transceiver module configured to send, to a core network device, first request information for requesting uplink positioning reference signal configuration information.

40. An information transmission apparatus, arranged in a user equipment (UE), comprising:
a transceiver module configured to send, to a core network device, first request information for requesting uplink positioning reference signal configuration information.

41. A communication device, comprising a processor, a transceiver, a memory, and an executable program stored in the memory and executable by the processor, wherein the processor, when executing the executable program, perform the information transmission method according to any one of claims 1 to 11, 12 to 23, or 24 to 37.

42. A computer storage medium having stored therein an executable program that, when executed by a processor, causes the information transmission method according to any one of claims 1 to 11, 12 to 23, or 24 to 37 to be implemented.
